# EUROPEAN PATENT SPECIFICATION

(11) **EP 2 211 651 B1**
(45) Date of publication and mention of the grant of the patent: **02.08.2017**
(21) Application number: 08847935.7
(22) Date of filing: 07.11.2008
(51) Int. Cl.: A43B 13/16, A43B 13/12, A43B 1/06, B29D 35/12, A43B 3/10, A43B 3/12, A43B 7/14, A43B 13/18, A43B 7/32, A43B 13/14

(54) **FOOTWEAR ARTICLE**
FUSSBEKLEIDUNGSARTIKEL
CHAUSSURE

(30) Priority: 09.11.2007 WO PCT/IB2007/003419
(43) Date of publication of application: 04.08.2010
(73) Proprietor: Fu, David, Hong Kong SAR (CN)
(72) Inventor: Fu, David, Hong Kong SAR (CN)
(74) Representative: Piésold, Alexander James
(86) International application number: PCT/IB2008/002993
(87) International publication number: WO 2009/060301

(56) References cited:
- CN-Y- 2 196 905
- CN-Y- 2 196 905
- DE-A1- 19 933 752
- FR-A1- 2 548 876
- JP-A- 2002 017 401
- JP-Y1- S4 325 333
- US-A1- 2004 045 193
- US-A1- 2006 130 364
- US-A1- 2006 130 364

## Description

### FIELD OF THE INVENTION

The present invention relates to the field of footwear articles, in particular to footwear of composite form.

### BACKGROUND OF THE INVENTION

It is well known in the art that shock loadings and forces applied to the underside of the foot of a person via the sole of footwear article have long term effects on the integrity of joints of a person, whilst also at times causing pain and discomfort, in particular when wearing footwear for extended periods of time.

Furthermore, it is well known that the majority of loading on impact to the foot of a person is imparted to the underside of the heel portion of the foot of a person in use.

Footwear articles having a substantially inflexible sole, in particular fashion items such as "clogs" having a solid timber sole and being secured to the foot of wearer by means of transverse strap member which extends over the upper front portion of the foot, may cause significant discomfort to wearer after extended periods of walking or standing.

Cushioning members provided on the upper surface of the sole, such as leather layers having cushioning by way of a sponge or latex material disposed between the leather layer and the upper surface, have been utilised to minimise impact loading to the foot of a wearer during use.

Other features such as transverse flexible joints joining the front portion of the sole to the rear portion of the sole have also been provided towards the front of the sole have also been provided, in order to provide for a degree of longitudinal flexion of the sole during walking.

FR 2548876 discloses a footwear structure which comprises an outsole, an upper and a midsole. The outsole includes at least one stretch zone for allowing expansion and contraction of the outsole, corresponding to expansion and contraction of a user's foot during wear. The upper may include stretch zones for allowing expansion of the upper and the midsole may include varying regions of rigidity.

Such solutions as those described above, although providing some degree of cushioning and comfort, are generally found to only provide partial relief to a user.

The present invention is provides a footwear article which overcomes or at least substantially ameliorates at least some of the deficiencies as exhibited by those of the prior art.

### SUMMARY OF THE INVENTION

In a first aspect, the present invention provides a footwear article comprising a generally elongate and substantially rigid sole member, that does not flex during ambulation and walking and remains as a substantially rigid body, having an upper surface for direct contact and interaction with at least a portion of the underside of the foot of the person, an under surface for interaction with a ground surface, a generally inelastic outer portion and having a rebate extending from the upper surface towards the under surface, and an elastic inner portion disposed within the rebate of said outer portion, wherein the rebate extends through said outer portion such that the outer portion is of annular form, and the inner portion extends therethrough; and a foot engagement member for securing the footwear article to the foot of a person, said foot engagement member extending laterally from a one side of the sole member to the other side of the sole member in a manner so as to extend over the upper side of the foot of a user so as to secure the footwear article to the foot of the user; wherein the outer portion of the sole member provides structural rigidity to the sole member and part of the outer portion forms part of the upper surface; and the inner portion forms a further part of the upper surface, is configured and arranged such that dampening is provided upon load being imparted to the foot of the person upon contact with the ground surface; wherein the inner portion comprises a first portion and a second portion, said first portion being for direct contact and interaction with at least a portion of the underside of the foot of the person; wherein the first portion is formed from a first polymeric material having a first density, and said second portion is formed from a second polymeric material having a second density; wherein the first portion and said second portion have been co-molded whilst within the rebate of said outer portion so as to form said inner portion.

Preferably, the outer portion is formed from a material selected from the group including timber, composite material or the like, and the outer portion is sized so as to provide structural rigidity to the sole member of the footwear article.

Preferably the first polymeric material and the second polymeric material are selected and the first portion and the second portion are sized and arranged so as to provide said dampening to the foot of the person upon contact with the ground surface.

Preferably, the first density is greater than the second density, and more preferably the first material is provided in a gel form and the second polymeric material is provided in an expanded form.

The first polymeric material and the second polymeric material are preferably selected from the group including thermoplastic polymeric materials, co-polymers and mixed polymer blends; more preferably selected from the group including polyurethane, ethylene vinyl acetate, poly vinyl acetate and the like; and more preferably the first material is a polyurethane gel material and the second material is an expanded polyurethane material.

The rebate of the outer portion is preferably positioned and sized such that contact between the underside of the foot of the wearer and the upper surface of the sole member is provided by the inner portion.

The footwear article may include a tread member disposed on the under surface of the sole member.

In a further aspect, the present invention provides a method of forming a sole member for a footwear article having a substantially structurally rigid sole member, that does not flex during ambulation and walking and remains as a substantially rigid body, and having damping properties for providing damping upon load being imparted to the foot of person upon contact with a ground surface, said method including the steps of: (i) providing a generally elongate and substantially structurally rigid annular outer portion having an aperture extending therethrough from an upper surface towards an under surface; and (ii) forming an inner portion within the aperture of the outer portion from one or more polymeric materials, wherein the said inner portion is molded and formed within the aperture of said outer portion; wherein the inner portion comprises a first portion and a second portion and forms a part of the upper surface, and is configured and located such that dampening is provided upon load being imparted to the foot of the person upon contact with the ground surface; and wherein the first portion being for direct contact and interaction with at least a portion of the underside of the foot of the person and being formed from a first polymeric material having a first density, and said second portion is formed from a second polymeric material having a second density; and wherein the first portion and the second portion are co-molded whilst within the aperture of said outer member so as to form said inner portion.

The first polymeric material is preferably a gel type polymeric material, and the second polymeric material is an expandable polymeric material; wherein the annular outer portion is inverted and first polymeric material is introduced within the aperture whilst in a liquid form and allowed to at least partly cure so as to form the first portion of the inner portion of the sole member; and upon said first polymeric material at least partly curing, the second polymeric material is introduced within the aperture of the outer portion and allowed to expand within said aperture.

The first polymeric material and the second polymeric material are preferably selected from the group including thermoplastic polymeric materials, co-polymers and mixed polymer blends; more preferably selected from the group including polyurethane, ethylene vinyl acetate, poly vinyl acetate and the like; and more preferably the first material is a polyurethane gel material and the secon material is an expanded polyurethane material.

The outer portion is preferably formed from a material selected from the group including timber, composite material or the like, and the outer portion is sized so as to provide structural rigidity to the sole member of the footwear article.

### BRIEF DESCRIPTION OF THE DRAWINGS

Preferred embodiments of the present invention will be explained in further detail below by way of examples and with reference to the accompanying drawings, in which:-
Figure 1a is a perspective view of an exemplary footwear article, which is not part of the invention;
Figure 1b is a plan view of the example as depicted in Figure 1a;
Figure 1c is an underside view of the example as depicted in Figures 1a and 1b;
Figure 1d is a side view of the as depicted in Figures 1a, 1b and 1c;
Figure 2a is a perspective view of a sole member of an exemplary embodiment of a footwear article according to the present invention;
Figure 2b is a plan view of the embodiment of the invention as depicted in Figure 2a;
Figure 2c is a side view of the embodiment of the invention as depicted in Figures 2a and 2b;
Figure 2d is an underside view of the embodiment of the invention as depicted in Figures 2a, 2b and 2c;
Figure 2e is a perspective view of the sole member of the embodiment of the invention as depicted in Figures 2a, 2b, 2c and 2d, without a dampening portion;
Figure 3a is a plan view of a schematic representation of the embodiment of the invention as depicted in Figures 2a, 2b, 2c and 2d
Figure 3b is a sectional side view of a schematic representation of the embodiment of the invention depicted in Figure 3a along the line A-A;
Figure 3c is a sectional side view of a schematic representation of the embodiment of the invention depicted in Figure 3a along the line B-B;
Figure 4a is a plan view of a schematic representation of the embodiment of the invention as depicted in Figure 2e;
Figure 4b is a sectional side view of a schematic representation of the embodiment of the invention depicted in Figure 4a along the line C-C;
Figure 4c is a sectional side view of a schematic representation of the embodiment of the invention depicted in Figure 4a along the line D-D;
Figure 5a is a schematic cross sectional view of a first stage of forming the embodiment of the invention as depicted in Figure 2e;
Figure 5b is a schematic cross sectional view of a second stage of forming the embodiment of the invention as depicted in Figure 2e;
Figure 5c is a schematic cross sectional view of a third stage of forming the embodiment of the invention as depicted in Figure 2e;
Figure 5d is a schematic cross sectional view of a fourth stage of forming the embodiment of the invention as depicted in Figure 2e;
Figure 5e is a schematic cross sectional view of a fifth stage of forming the embodiment of the invention as depicted in Figure 2e; and
Figure 5f is a schematic cross sectional view of a sixth stage of forming the embodiment of the invention as depicted in Figure 2e;

### DETAILED DESCRIPTION OF THE PREFERRED EMBODIMENTS

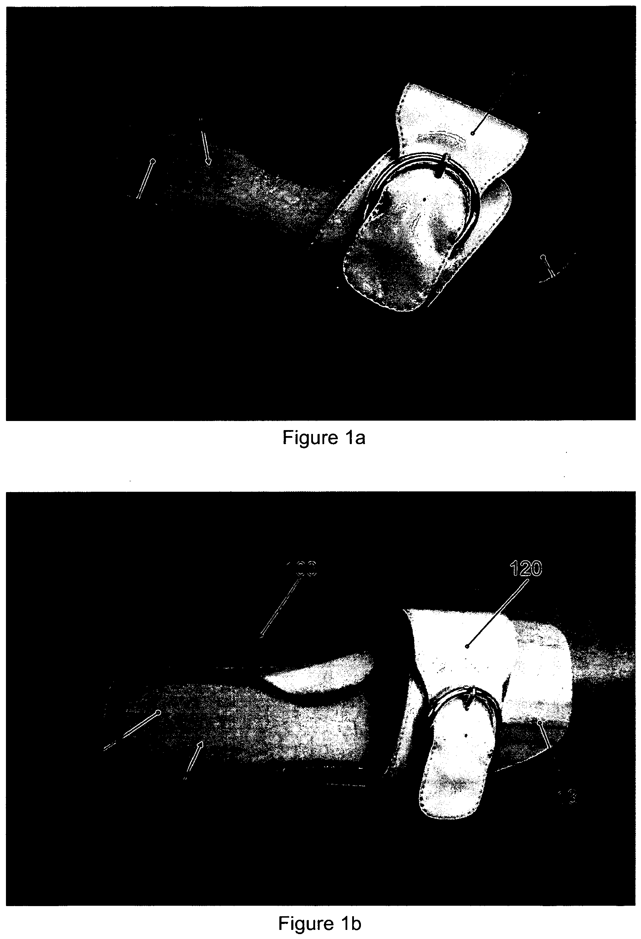

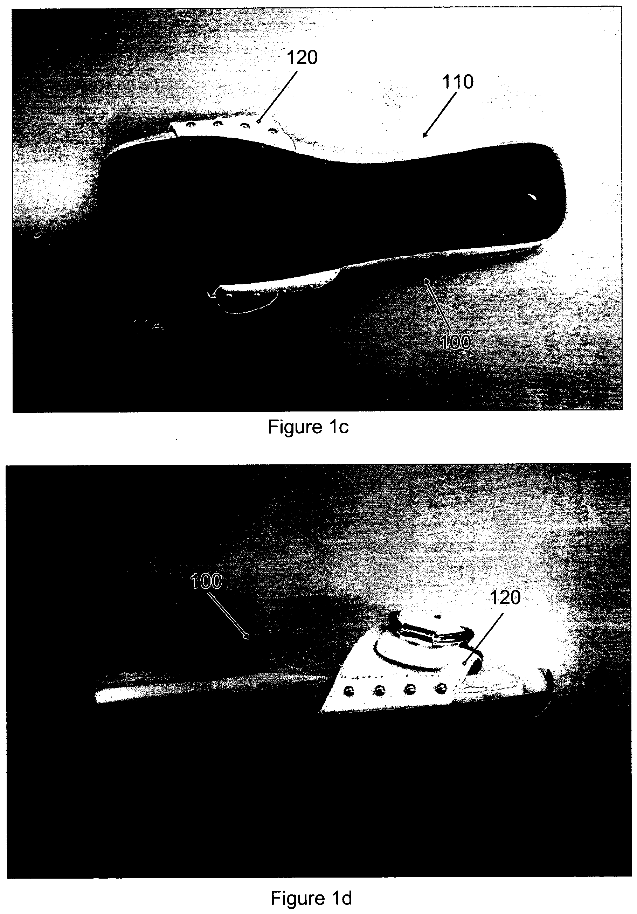

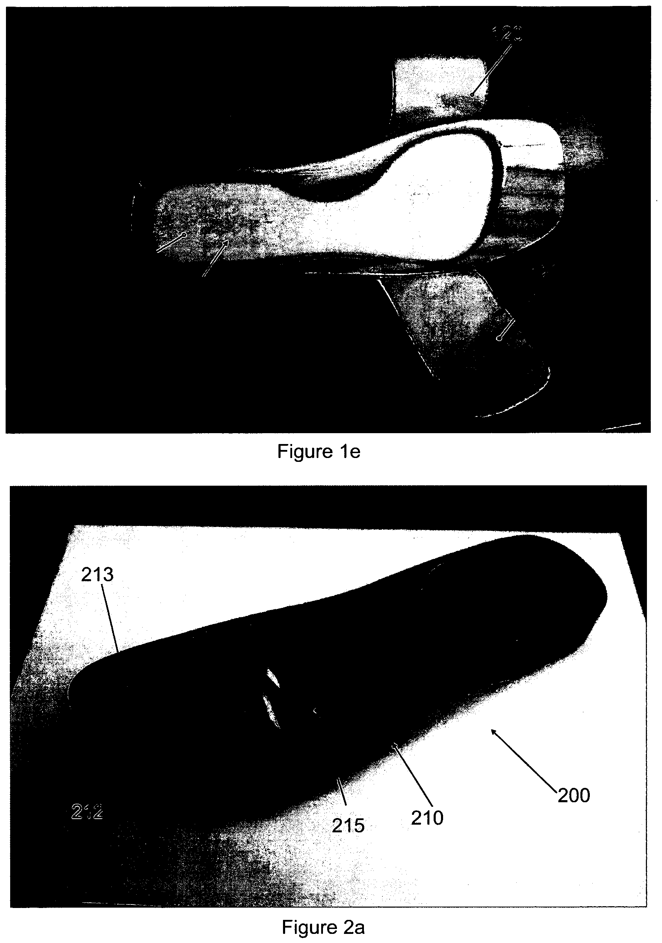

Referring to Figures 1a to 1e, there is shown a footwear article **100.** The footwear article **100** comprises a generally elongate and substantially rigid sole member **110.** The sole member, is provided in such a manner that during ambulation and walking, the sole member does not flex, and remains as a substantially rigid body. The footwear article **100** further includes a foot engagement member **120** used to secure the foot of a user against the upper surface **112** of the sole member **110.** As will be appreciated by those skilled in the art, numerous manners and variations of foot engagement members **120** may be applied whilst also being applicable to the present invention.

The rigid sole member **110** comprises a generally inelastic outer portion **113** which includes a rebate (although not depicted until subsequent Figures) in which an elastic inner portion **115** is located. The outer portion **113** of the sole member **110** provides for structural rigidity, whilst the inner portion **115** is arranged and configured so as to provide dampening to the foot of a person when the footwear article **110** is worn.

The present exemplary embodiment of the footwear article **100** is provided in the form of an open-type "clog", a fashion item frequently used by people. Those skilled in the art, with familiarity of such footwear articles, will understand that such articles of the prior art are provided as a solid sole, which may have a small amount of padding on the upper surface in the form of a leather cover, however those skilled in the art will readily identify and be aware as to the discomfort upon long term wearing of such items, due to a user being essentially standing on top of a block of wood and having their body weight transmitted through the block of wood directly to the ground. Those skilled in the art will also be aware of the discomfort upon long term usage, during both walking and standing, experienced by people wearing such footwear articles.

By providing a rigid footwear article as is used and utilized in the prior art, with the additional feature of a recessed shock absorbing or dampening member upon which the foot of a user is placed, will provide significant increased comfort to the user.

Furthermore, those skilled in the art will appreciate that the footwear article as provided by the present invention and discussed in relation to the present exemplary embodiment, by having the portion which provides for comfort located inward of the periphery of the sole member **110** and a rebate position appropriately, still provides for a footwear article having the visual appearance of a wooden open-type "clog" whilst overcoming the discomfort and inconvenience of "clog" as provided by the prior art.

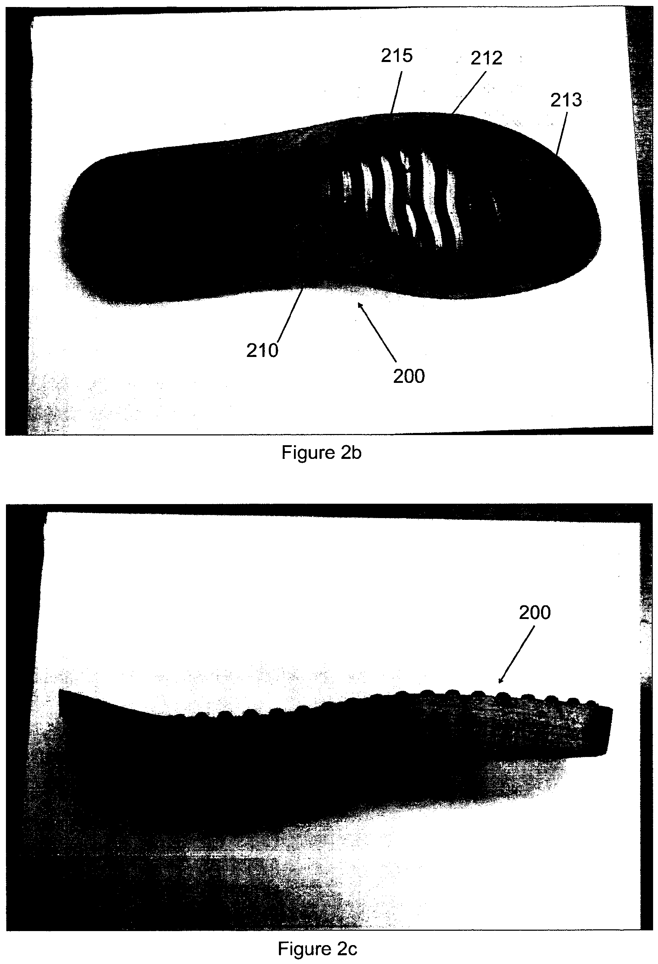

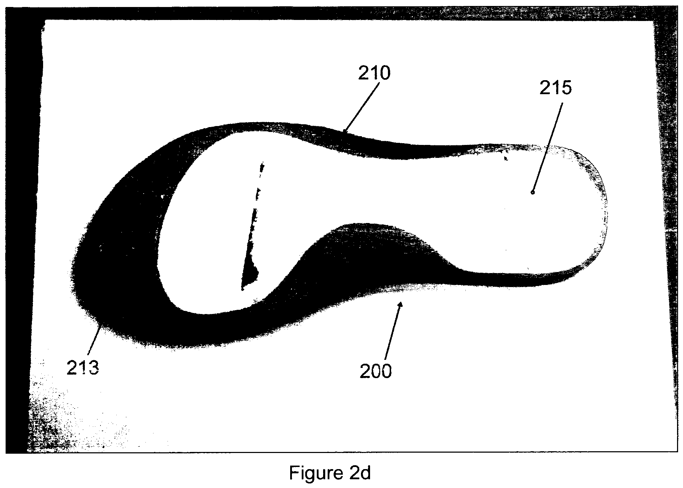

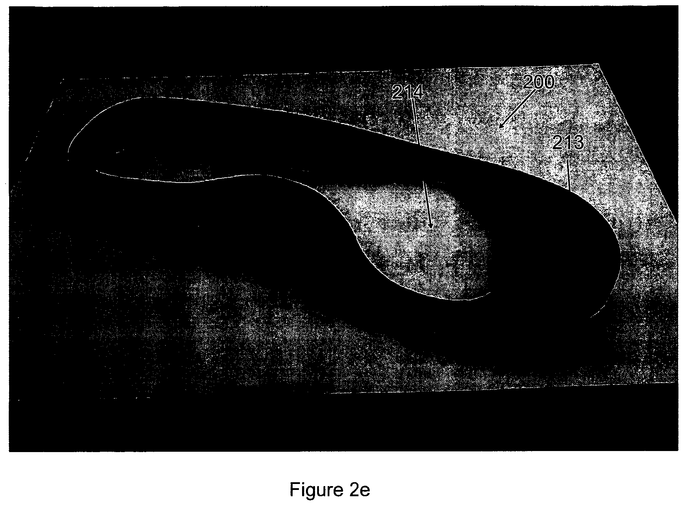

Referring to Figures 2a to 2e, there is shown an embodiment of a footwear article according to the present invention, again being provided in the style and design of a wooden "clog" type footwear article **200.** The footwear article **200** in the present embodiment is provided with a rebate which extends fully through the outer portion **213** so as to provide an aperture **216** as shown in Figure 2e in which the inner portion **215** has been removed for illustrative purposes. Thus, as will be appreciated by those skilled in the art, the inner portion extends from the upper surface **212,** through the aperture **216** of the outer portion **213** and through to the under surface **214.**

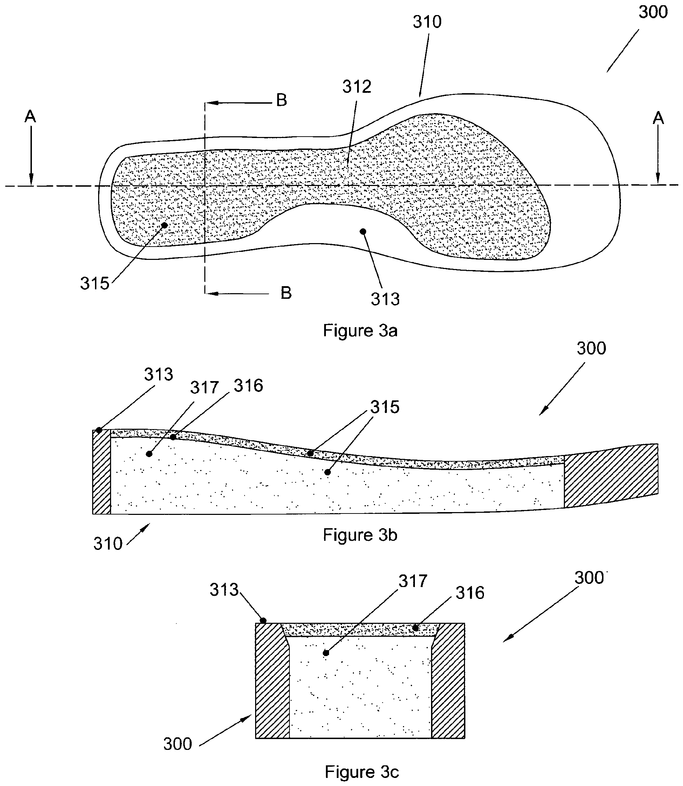

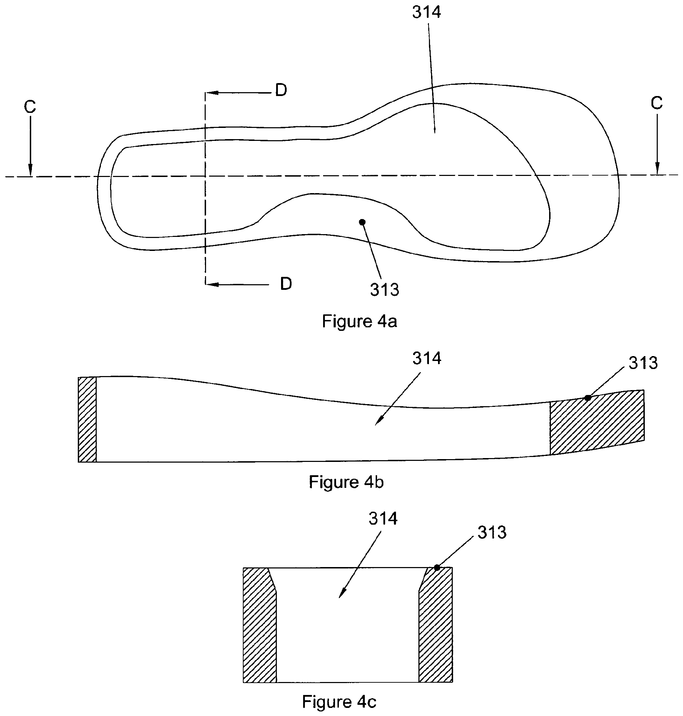

Referring to Figures 3a to 3c, and Figures 4a to 4c, the inner portion **315** includes a first portion **316** and a second portion **317.** The first portion **316** provides for direct contact and interaction with the underside of the foot of a person. The first portion and the second portion **316, 317** of the inner portion **315** are formed from polymeric materials. The polymeric materials are selected and the first portion and second portion **316, 317** are sized and arranged so as to provide dampening to the foot of the person during use. The first portion and the second portion **316, 317** are co-molded whilst within the aperture **314** of the outer portion **313.** The first portion **316** is formed from a polymeric material in a gel form, and the second portion **317** is formed from a polymeric material in an expanded form.

Suitable such polymers for the formation of the inner portion **315** include thermoplastic polymeric materials, co-polymers and mixed polymer blends. In particular, suitable materials for co-molding include polyurethane, ethylene vinyl acetate, poly vinyl acetate and the like. As will be appreciated by those skilled in the art, numerous combinations of polymeric materials may be utilized so as to provide appropriate dampening, without departing from the scope of the present invention.

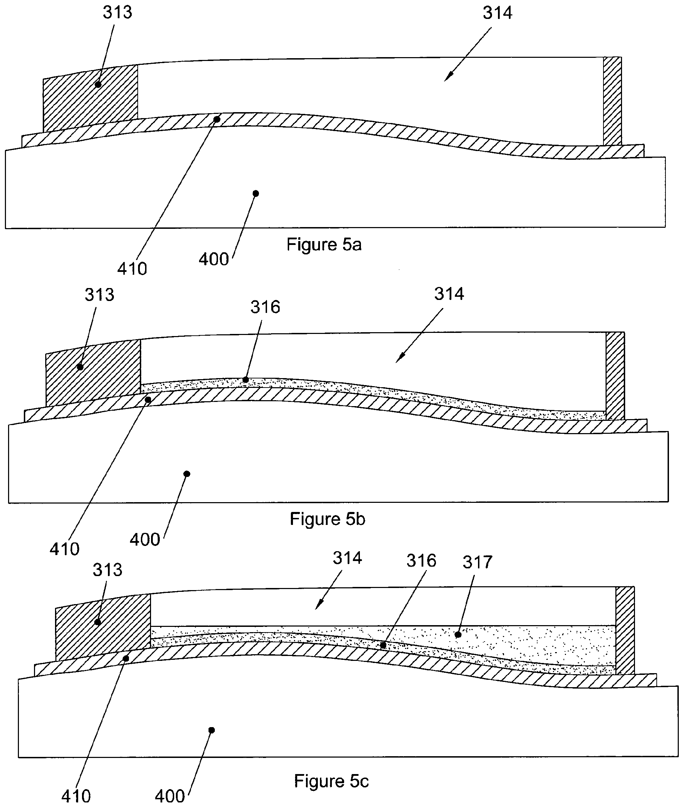

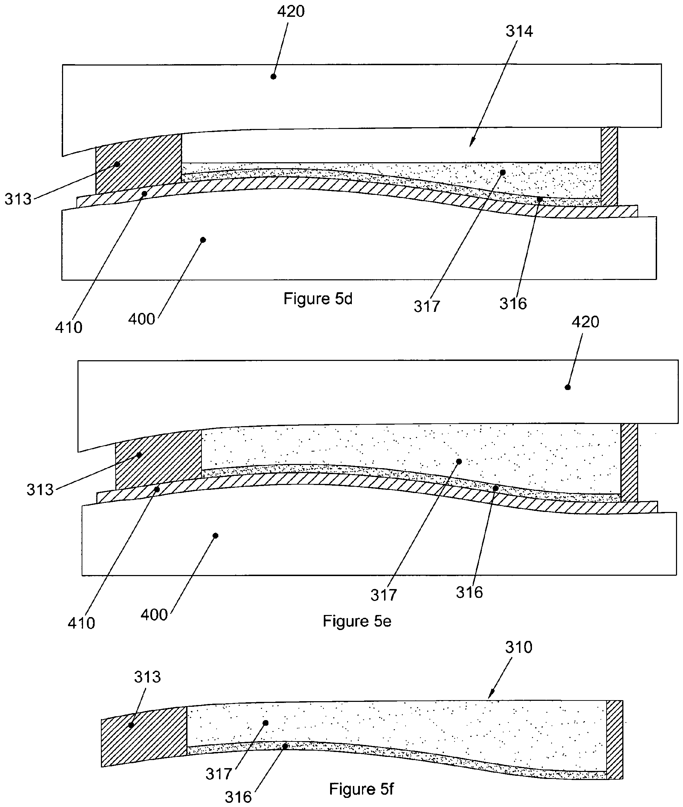

Referring to Figures 5a to 5f, there is shown a schematic sequential process for forming the inner portion **315** of the sole member **310** of the embodiment as depicted in Figures 3a to 3c and Figures 4a to 4c. The inner portion **315** is formed whilst within the aperture **314** of the outer portion **313** as depicted in the present embodiment. Referring to Figure 5a, the outer portion **313** of the sole member **310** is inverted and placed on a lower mold member **400.** A deformable silicone layer is disposed between the outer portion **313** and the lower mold member **400** so as to seal the aperture **314.**

Referring now to Figure 5b, a liquefied gel type material is poured into the aperture **414** and allowed to settle so as to provide an appropriate thickness of the first portion **316.** A suitable material for this application is gel type polyurethane. The first portion **316** gel layer is allowed to cure, typically by being heated in an oven or the like of a nominal and applicable time, so as to form a partly set layer, suitable for formation of the second portion **317** thereon.

Referring to Figurer 5c, an expandable polymeric material is poured into the aperture **314** of the outer portion **313** on top of the at least partly set gel-like first portion **316.** Persons skilled in the art will readily appreciate that numerous polymers may be applicable for such applications, such as polyurethane, and that an appropriate amount of expandable polymeric material should be utilized.

Referring to Figures 5d and 5e, an upper mold member **420** is placed upon the outer portion **313** of the sole member **310,** and appropriate heat applied so as to allow the expandable polymeric materials to expand so as to form the second portion **317** in an expanded state as depicted in Figure 5e. After a suitable duration, as will be readily understood by those skilled in the art, the sole member **310** may be removed from the lower mold member **400** and the upper mold member **420,** the sole member **310** then being suitable for attachment thereto of a foot engagement means, so as to provide a footwear article **300** according to the present invention.

The present invention overcomes deficiencies and inconveniences associated with footwear having rigid inflexible soles of the prior art. Direct heel impact to the ground via traditional solid and non-flexible soled footwear, such as open-type "clogs", provides significant foot discomfort and can also provide cumulative damage to persons wearing such footwear. Furthermore, discomfort caused by long time usage, both stationery and walking, are significant inconveniences associated with the prior art.

The present invention, by providing a central "core" type member which has shock absorption type properties, addresses these deficiencies associated with the prior art.

Furthermore, those skilled in the art will appreciate that wooden or timber type "clog" footwear articles are a fashion article, and that it is necessary to maintain the appearance of the footwear article as remaining as a clog. The present invention, by providing the internal dampening and shock absorption member which does not extend to the periphery of the sole of the footwear, still provides for a non-flexible wooden open-type clog, without compromising user comfort or health.

Furthermore, significant advantages are provided by the present invention in which the inner portion is formed whilst within the aperture of the outer portion, thus allowing full and complete fits of the inner portion, without the necessity of having to prepare inserts suitably size to fit within the aperture. Thus, the present invention obviates the necessity of having a mold for forming the inner portion, as the outer portion is in fact the mold thus providing an economic advantage in addition to manufacturing advantages. Those skilled in the art will understand that a wooden or timber type device, is not generally of an exact uniform size always, and difficulty can be experienced when attempting to prepare a cut out suitable for insertion within an aperture. Thus, the present invention also overcomes manufacturing difficulties associated with typical processes of the prior art. Furthermore, by providing an inner portion which is formed within the aperture, little or no waste material exists, thus providing both economic advantages as well as reducing the amount of waste, again being beneficial to the environment.

By utilizing a co-molding process in embodiments in which a two layer inner portion is formed comprising a gel layer and an expanded polymeric layer, the layers may be formed as a unitary construct without the necessity of any joining being required, thus increasing the integrity between the layers, and also mitigating any delamination between the layers which may occur, if traditional type manufacturing techniques were to be utilized.

Furthermore, a co-molding process by which both the gel layer and expanded polymeric foam layer are formed within the aperture utilizing the outer portion on the mold, allows for the gel layer be substantially conformed to the periphery of the aperture at the upper surface. This, as will be appreciated by those skilled in the art, allows for increased bonding and conformity, and reduces again the likelihood of separation between the gel layer and the outer timber portion. Thus, the co-molding process according to the present invention, also provides a product having increased longevity in comparison to products, than if formed according to traditional manufacturing techniques.

A further advantage of the present invention, by utilizing the silicone layer between the lower mold member and the upper surface of the sole member, allows surface designs, such as rippling or a pattern to be provided in the exterior surface of the gel layer. By providing a pattern in the silicone layer, the inverse of that pattern will be imparted to the gel layer as it is formed during the molding process. Thus, surface effects may be incorporated within the outer surface of the gel layer, which provides an aesthetically pleasing aspect to the article. Furthermore, functional characteristics may be molded into the outer surface, such as ripples or grooves to prevent slippage of the foot when wearing the footwear article.

While the present invention has been explained by reference to the examples or preferred embodiments described above, it will be appreciated that those are examples to assist understanding of the present invention and are not meant to be restrictive.

Furthermore, while the present invention has been explained by reference to "flip-flop" type footwear articles, it should be appreciated that the invention can apply to other footwear articles within the scope of the appended claims.

## Claims

1. A footwear article (300) comprising:
a generally elongate and substantially rigid sole member (310), that does not flex during ambulation and walking and remains as a substantially rigid body, having an upper surface (312) for direct contact and interaction with at least a portion of the underside of the foot of the person, an under surface for interaction with a ground surface, a generally inelastic outer portion (313) and having a rebate (314) extending from the upper surface (312) towards the under surface, and an elastic inner portion (315) disposed within the rebate of said outer portion (313), wherein the rebate (314) extends through said outer portion such that the outer portion is of annular form, and the inner portion (315) extends therethrough; and
a foot engagement member for securing the footwear article to the foot of a person, said foot engagement member extending laterally from a one side of the sole member (310) to the other side of the sole member (310) in a manner so as to extend over the upper side of the foot of a user so as to secure the footwear article (300) to the foot of the user;
wherein the outer portion (313) of the sole member provides structural rigidity to the sole member (310) and part of the outer portion (313) forms part of the upper surface; and
the inner portion (315) forms a further part of the upper surface (312), is configured and arranged such that dampening is provided upon load being imparted to the foot of the person upon contact with the ground surface;
wherein the inner portion (315) comprises a first portion (316) and a second portion (317), said first portion (316) being for direct contact and interaction with at least a portion of the underside of the foot of the person;
wherein the first portion (316) is formed from a first polymeric material having a first density, and said second portion is formed from a second polymeric material having a second density;
wherein the first portion (316) and said second portion (317) have been co-molded whilst within the rebate (314) of said outer portion (313) so as to form said inner portion (315).

2. A footwear article (300) according to claim 1, wherein the outer portion (313) is formed from a material selected from the group including timber, composite material or the like, and the outer portion is sized so as to provide structural rigidity to the sole member (310) of the footwear article (300).

3. A footwear article according to claims 1 or 2, wherein the first density is greater than the second density.

4. A footwear article according to claims 1, 2 or 3, wherein the first material is provided in a gel form and the second polymeric material is provided in an expanded form.

5. A footwear article according to any preceding claim,
wherein the first polymeric material and the second polymeric material are selected from the group including thermoplastic polymeric materials, co-polymers and mixed polymer blends; or
wherein the first polymeric material and the second polymeric material are selected from the group including polyurethane, ethylene vinyl acetate, poly vinyl acetate and the like; or
wherein the first material is a polyurethane gel material and the second material is an expanded polyurethane material.

6. A footwear article (300) according to any one of the preceding claims, wherein the rebate (314) of the outer portion (313) is positioned and sized such that contact between the underside of the foot of the wearer and the upper surface (312) of the sole member (310) is provided by the inner portion (315).

7. A footwear article (300) according to any one of the preceding claims, further including a tread member disposed on the under surface of the sole member (310).

8. A method of forming a sole member (310) for a footwear article having a substantially structurally rigid sole member (310), that does not flex during ambulation and walking and remains as a substantially rigid body, and having damping properties for providing damping upon load being imparted to the foot of person upon contact with a ground surface, said method including the steps of:
(i) providing a generally elongate and substantially structurally rigid annular outer portion (313) having an aperture (314) extending therethrough from an upper surface (312) towards an under surface; and
(ii) forming an inner portion (315) within the aperture (314) of the outer portion (313) from one or more polymeric materials, wherein the said inner portion (315) is molded and formed within the aperture (314) of said outer portion (313);
wherein the inner portion (315) comprises a first portion (316) and a second portion (317) and forms a part of the upper surface (312), and is configured and located such that dampening is provided upon load being imparted to the foot of the person upon contact with the ground surface; and
wherein the first portion (316) being for direct contact and interaction with at least a portion of the underside of the foot of the person and being formed from a first polymeric material having a first density, and said second portion (317) is formed from a second polymeric material having a second density; and
wherein the first portion (316) and the second portion (317) are co-molded whilst within the aperture (314) of said outer member so as to form said inner portion (315).

9. A method of forming a sole member (310) according to claim 8, wherein the first polymeric material is a gel type polymeric material, and the second polymeric material is an expandable polymeric material;
wherein the annular outer portion (313) is inverted and first polymeric material is introduced within the aperture whilst in a liquid form and allowed to at least partly cure so as to form the first portion of the inner portion (315) of the sole member (310); and
upon said first polymeric material at least partly curing, the second polymeric material is introduced within the aperture (314) of the outer portion (313) and allowed to expand within said aperture (314).

10. A method of forming a sole member according to claim 8 or claim 9,
wherein the first polymeric material and the second polymeric material are selected from the group including thermoplastic polymeric materials, co-polymers and mixed polymer blends; or
wherein the first polymeric material and the second polymeric material are selected from the group including polyurethane, ethylene vinyl acetate, poly vinyl acetate and the like; or
wherein the first material is a polyurethane gel material and the second material is an expanded polyurethane material.

11. A method of forming a sole member (310) according to any one of claims 8 to 10, wherein the outer portion (310) is formed from a material selected from the group including timber, composite material or the like, and the outer portion is sized so as to provide structural rigidity to the sole member of the footwear article (300).

## Patentansprüche

1. Fußbekleidungsartikel (300), umfassend:
ein generell längliches und im Wesentlichen steifes Sohlenelement (310), das sich während des Gehens und Laufens nicht biegt und ein im Wesentlichen steifer Körper bleibt,
mit einer oberen Fläche (312) für direkten Kontakt und Wechselwirkung mit mindestens einem Teil der Unterseite des Fußes der Person, einer unteren Fläche zur Wechselwirkung mit einer Bodenfläche, einem generell unelastischen äußeren Teil (313) und mit einer Ausnehmung (314), die sich von der oberen Fläche (312) zu der unteren Fläche erstreckt, und einem elastischen inneren Teil (315), der in der Ausnehmung des äußeren Teils (313) angeordnet ist, wobei die Ausnehmung (314) sich so durch den äußeren Teil erstreckt, dass der äußere Teil ringförmig ist und der innere Teil (315) sich dort hindurch erstreckt; und
ein Fußeingriffselement zum Sichern des Fußbekleidungsartikels an dem Fuß einer Person, wobei das Fußeingriffselement sich seitlich von einer Seite des Sohlenelements (310) zur anderen Seite des Sohlenelements (310) erstreckt, derart, dass es sich über die Oberseite des Fußes eines Benutzers erstreckt, um den Fußbekleidungsartikel (300) am Fuß des Benutzers zu sichern;
wobei der äußere Teil (313) des Sohlenelements dem Sohlenelement (310) strukturelle Steifigkeit verleiht und ein Teil des äußeren Teils (313) einen Teil der oberen Fläche bildet; und
der innere Teil (315) einen weiteren Teil der oberen Fläche (312) bildet und so eingerichtet und angeordnet ist, dass eine Dämpfung bereitgestellt wird, sobald bei Kontakt mit der Bodenfläche eine Last auf den Fuß der Person ausgeübt wird;
wobei der innere Teil (315) einen ersten Teil (316) und einen zweiten Teil (317) umfasst, wobei der erste Teil (316) zum direkten Kontakt und zur Wechselwirkung mit mindestens einem Teil der Unterseite des Fußes der Person dient;
wobei der erste Teil (316) aus einem ersten Polymermaterial mit einer ersten Dichte gebildet ist und der zweite Teil aus einem zweiten Polymermaterial mit einer zweiten Dichte gebildet ist;
wobei der erste Teil (316) und der zweite Teil (317) zusammen geformt wurden, während sie sich in der Ausnehmung (314) des äußeren Teils (313) befanden, um den inneren Teil (315) zu bilden.

2. Fußbekleidungsartikel (300) nach Anspruch 1, wobei der äußere Teil (313) aus einem Material gebildet ist, ausgewählt aus der Gruppe, umfassend Holz, Verbundwerkstoff oder dergleichen, und der äußere Teil so dimensioniert ist, dass er dem Sohlenelement (310) des Fußbekleidungsartikels (300) strukturelle Steifigkeit verleiht.

3. Fußbekleidungsartikel nach Ansprüchen 1 oder 2, wobei die erste Dichte größer als die zweite Dichte ist.

4. Fußbekleidungsartikel nach Ansprüchen 1, 2 oder 3, wobei das erste Material in einer Gelform vorgesehen ist und das zweite Polymermaterial in einer expandierten Form vorgesehen ist.

5. Fußbekleidungsartikel nach gleich welchem vorhergehenden Anspruch,
wobei das erste Polymermaterial und das zweite Polymermaterial aus der Gruppe ausgewählt sind, umfassend thermoplastische Polymermaterialien, Copolymere und gemischte Polymermischungen; oder
wobei das erste Polymermaterial und das zweite Polymermaterial aus der Gruppe ausgewählt sind, umfassend Polyurethan, Ethylenvinylacetat, Polyvinylacetat und dergleichen; oder
wobei das erste Material ein Polyurethan-Gelmaterial ist und das zweite Material ein expandiertes Polyurethanmaterial ist.

6. Fußbekleidungsartikel (300) nach einem der vorhergehenden Ansprüche, wobei die Ausnehmung (314) des äußeren Teils (313) so positioniert und dimensioniert ist, dass der Kontakt zwischen der Unterseite des Fußes des Trägers und der oberen Fläche (312) des Sohlenelements (310) durch den inneren Teil (315) bereitgestellt wird.

7. Fußbekleidungsartikel (300) nach einem der vorhergehenden Ansprüche, weiter ein unter der unteren Fläche des Sohlenelements (310) angeordnetes Laufflächenelement umfassend.

8. Verfahren zur Bildung eines Sohlenelements (310) für einen Fußbekleidungsartikel, der ein im Wesentlichen strukturell steifes Sohlenelement (310) aufweist, das sich während des Gehens und Laufens nicht biegt und ein im Wesentlichen steifer Körper bleibt, und Dämpfungseigenschaften aufweist zur Bereitstellung von Dämpfung, sobald bei Kontakt mit einer Bodenfläche eine Last auf den Fuß der Person ausgeübt wird, wobei das Verfahren die Schritte umfasst des:
(i) Bereitstellens eines generell länglichen und im Wesentlichen strukturell steifen ringförmigen äußeren Teils (313) mit einer sich dort hindurch von einer oberen Fläche (312) zu einer unteren Fläche erstreckenden Öffnung (314); und
(ii) Bildens, in der Öffnung (314) des äußeren Teils (313), eines inneren Teils (315) aus einem oder mehreren Polymermaterialien, wobei der innere Teil (315) in der Öffnung (314) des äußeren Teils (313) geformt und ausgebildet wird;
wobei der innere Teil (315) einen ersten Teil (316) und einen zweiten Teil (317) umfasst und einen Teil der oberen Fläche (312) bildet und so eingerichtet und angeordnet ist, dass eine Dämpfung bereitgestellt wird, sobald bei Kontakt mit der Bodenfläche eine Last auf den Fuß der Person ausgeübt wird; und
wobei der erste Teil (316) zum direkten Kontakt und zur Wechselwirkung mit mindestens einem Teil der Unterseite des Fußes der Person dient und aus einem ersten Polymermaterial mit einer ersten Dichte gebildet ist und der zweite Teil (317) aus einem zweiten Polymermaterial mit einer zweiten Dichte gebildet ist; und
wobei der erste Teil (316) und der zweite Teil (317) zusammen geformt werden, während sie sich in der Ausnehmung (314) des äußeren Elements befinden, um den inneren Teil (315) zu bilden.

9. Verfahren zur Bildung eines Sohlenelements (310) nach Anspruch 8,
wobei das erste Polymermaterial ein Polymermaterial vom Geltyp ist und das zweite Polymermaterial ein expandierbares Polymermaterial ist;
wobei der ringförmige äußere Teil (313) umgedreht wird und erstes Polymermaterial in die Öffnung eingebracht wird, während es in einer flüssigen Form vorliegt, und man es mindestens teilweise aushärten lässt, um den ersten Teil des inneren Teils (315) des Sohlenelements (310) zu bilden; und
sobald das erste Polymermaterial mindestens teilweise aushärtet, wird das zweite Polymermaterial in die Öffnung (314) des äußeren Teils (313) eingebracht und man lässt es in der Öffnung (314) expandieren.

10. Verfahren zur Bildung eines Sohlenelements nach Anspruch 8 oder Anspruch 9, wobei das erste Polymermaterial und das zweite Polymermaterial aus der Gruppe ausgewählt sind, umfassend thermoplastische Polymermaterialien, Copolymere und gemischte Polymermischungen; oder
wobei das erste Polymermaterial und das zweite Polymermaterial aus der Gruppe ausgewählt sind, umfassend Polyurethan, Ethylenvinylacetat, Polyvinylacetat und dergleichen; oder
wobei das erste Material ein Polyurethan-Gelmaterial ist und das zweite Material ein expandiertes Polyurethanmaterial ist.

11. Verfahren zur Bildung eines Sohlenelements (310) nach einem der Ansprüche 8 bis 10, wobei der äußere Teil (310) aus einem Material gebildet wird, ausgewählt aus der Gruppe, umfassend Holz, Verbundwerkstoff oder dergleichen, und der äußere Teil so dimensioniert ist, dass er dem Sohlenelement des Fußbekleidungsartikels (300) strukturelle Steifigkeit verleiht.

## Revendications

1. Chaussure (300) comprenant :
un élément de semelle généralement allongé et sensiblement rigide (310), qui ne fléchit pas pendant la déambulation et la marche et reste comme un corps sensiblement rigide,
présentant une surface supérieure (312) pour le contact direct et l'interaction avec au moins une partie du dessous du pied de la personne, une surface inférieure pour l'interaction avec une surface de sol, une partie extérieure généralement non élastique (313) et présentant un rabat (314) s'étendant depuis la surface supérieure (312) vers la surface inférieure, et une partie intérieure élastique (315) disposée dans le rabat de ladite partie extérieure (313), dans laquelle le rabat (314) s'étend au travers de ladite partie extérieure de sorte que la partie extérieure soit de forme annulaire, et la partie intérieure (315) s'étend au travers de celle-ci ; et
un élément d'enclenchement de pied pour la fixation de la chaussure au pied d'une personne, ledit élément d'enclenchement de pied s'étendant latéralement depuis un côté de l'élément de semelle (310) à l'autre côté de l'élément de semelle (310) de manière à s'étendre sur le côté supérieur du pied d'un utilisateur de sorte à fixer la chaussure (300) au pied de l'utilisateur ;
dans laquelle la partie extérieure (313) de l'élément de semelle fournit une rigidité structurelle à l'élément de semelle (310) et une partie de la partie extérieure (313) forme une partie de la surface supérieure ; et
la partie intérieure (315) forme une partie supplémentaire de la surface supérieure (312), est configurée et agencée de sorte que l'amortissement soit fourni suite à la communication de la charge au pied de la personne suite au contact avec la surface de sol ;
dans laquelle la partie intérieure (315) comprend une première partie (316) et une seconde partie (317), ladite première partie (316) étant destinée au contact direct et à l'interaction avec au moins une partie du dessous du pied de la personne ;
dans laquelle la première partie (316) est formée à partir d'un premier matériau polymère présentant une première densité, et ladite seconde partie est formée à partir d'un second matériau polymère présentant une seconde densité ;
dans laquelle la première partie (316) et ladite seconde partie (317) ont été comoulées alors qu'elles sont dans le rabat (314) de ladite partie extérieure (313) de sorte à former ladite partie intérieure (315).

2. Chaussure (300) selon la revendication 1, dans laquelle la partie extérieure (313) est formée à partir d'un matériau sélectionné dans le groupe incluant le bois, un matériau composite ou similaires, et la partie extérieure est dimensionnée de sorte à fournir une rigidité structurelle à l'élément de semelle (310) de la chaussure (300).

3. Chaussure selon la revendication 1 ou 2, dans laquelle la première densité est supérieure à la seconde densité.

4. Chaussure selon la revendication 1, 2 ou 3, dans laquelle le premier matériau est fourni sous une forme de gel et le second matériau polymère est fourni sous une forme expansée.

5. Chaussure selon une quelconque revendication précédente,
dans laquelle le premier matériau polymère et le second matériau polymère sont sélectionnés dans le groupe incluant des matériaux polymères thermoplastiques, des copolymères et des mélanges de polymères mixtes ; ou
dans laquelle le premier matériau polymère et le second matériau polymère sont sélectionnés dans le groupe incluant le polyuréthane, l'éthylène-acétate de vinyle, l'acétate de polyvinyle et similaires ; ou
dans laquelle le premier matériau est un matériau de gel de polyuréthane et le second matériau est un matériau de polyuréthane expansé.

6. Chaussure (300) selon l'une quelconque des revendications précédentes, dans laquelle le rabat (314) de la partie extérieure (313) est positionné et dimensionné de sorte que le contact entre le dessous du pied du porteur et la surface supérieure (312) de l'élément de semelle (310) soit fourni par la partie intérieure (315).

7. Chaussure (300) selon l'une quelconque des revendications précédentes, incluant en outre un élément de marche disposé sur la surface inférieure de l'élément de semelle (310).

8. Procédé de formation d'un élément de semelle (310) pour une chaussure présentant un élément de semelle sensiblement structurellement rigide (310) qui ne fléchit pas pendant la déambulation et la marche et reste comme un corps sensiblement rigide, et présentant des propriétés d'amortissement pour la fourniture d'un amortissement suite à la communication de charge au pied de la personne suite au contact avec une surface de sol, ledit procédé comprenant les étapes de :
(i) fourniture d'une partie extérieure annulaire (313) généralement allongée et sensiblement structurellement rigide présentant une ouverture (314) s'étendant au travers de celle-ci depuis une surface supérieure (312) vers une surface inférieure ; et
(ii) formation d'une partie intérieure (315) dans l'ouverture (314) de la partie extérieure (313) à partir d'un ou de plusieurs matériaux polymères, dans lequel ladite partie intérieure (315) est moulée et formée dans l'ouverture (314) de ladite partie extérieure (313) ;
dans lequel la partie intérieure (315) comprend une première partie (316) et une seconde partie (317) et forme une partie de la surface supérieure (312), et est configurée et située de sorte que l'amortissement soit fourni suite à la communication de charge au pied de la personne suite au contact avec la surface de sol ; et
dans lequel la première partie (316) étant destinée au contact direct et à l'interaction avec au moins une partie du dessous du pied de la personne et étant formée à partir d'un premier matériau polymère présentant une première densité, et ladite seconde partie (317) est formée à partir d'un second matériau polymère présentant une seconde densité ; et
dans lequel la première partie (316) et la seconde partie (317) sont comoulées alors qu'elles sont dans l'ouverture (314) dudit élément extérieur de sorte à former ladite partie intérieure (315).

9. Procédé de formation d'un élément de semelle (310) selon la revendication 8, dans lequel le premier matériau polymère est un matériau polymère de type gel, et le second matériau polymère est un matériau polymère expansible ;
dans lequel la partie extérieure annulaire (313) est inversée et le premier matériau polymère est introduit dans l'ouverture alors qu'il est sous une forme liquide et laissé cuire au moins partiellement de sorte à former la première partie de la partie intérieure (315) de l'élément de semelle (310) ; et
suite à la cuisson au moins partielle dudit premier matériau polymère, le second matériau polymère est introduit dans l'ouverture (314) de la partie extérieure (313) et laissé s'expanser dans ladite ouverture (314).

10. Procédé de formation d'un élément de semelle selon la revendication 8 ou 9,
dans lequel le premier matériau polymère et le second matériau polymère sont sélectionnés dans le groupe incluant des matériaux polymères thermoplastiques, des copolymères et des mélanges de polymères mixtes ; ou
dans lequel le premier matériau polymère et le second matériau polymère sont sélectionnés dans le groupe incluant le polyuréthane, l'éthylène-acétate de vinyle, l'acétate de polyvinyle et similaires ; ou
dans lequel le premier matériau est un matériau de gel de polyuréthane et le second matériau est un matériau de polyuréthane expansé.

11. Procédé de formation d'un élément de semelle (310) selon l'une quelconque des revendications 8 à 10, dans lequel la partie extérieure (310) est formée à partir d'un matériau sélectionné dans le groupe incluant le bois, un matériau composite ou similaires et la partie extérieure est dimensionnée de sorte à fournir une rigidité structurelle à l'élément de semelle de la chaussure (300).
